# EUROPÄISCHE PATENTANMELDUNG

(11) **EP 0 943 394 A2**
(43) Veröffentlichungstag der Anmeldung: **22.09.1999**
(21) Anmeldenummer: 99104738.2
(22) Anmeldetag: 10.03.1999
(51) Int. Cl.: B23P 19/04, B27M 3/34

(54) **Verfahren und Vorrichtung zum Reparieren beschädigter Paletten aus Holz**

(30) Priorität: 17.03.1998 DE 19811521; 18.05.1998 DE 19822229
(71) Anmelder: Heuser, Dirk, 28844 Weyhe (DE)
(72) Erfinder: Heuser, Dirk, 28844 Weyhe (DE)
(74) Vertreter: von Ahsen, Erwin-Detlef

(57) **Zusammenfassung**

Die Erfindung befaßt sich mit dem Problem des automatisierten Reparierens von beschädigten Holzpaletten durch Austausch beschädigter Teile. Erfindungsgemäß werden von der beschädigten Palette (10) zunächst vorbestimmte, beschädigte Bretter (13) und/oder Kufen (30) abgetrennt und sodann die abgetrennten Bretter (13) und/oder Kufen (30) aus dem Arbeitsbereich ausgeschleust. Die dann teildemontierte Palette (10) wird mit intakten, das heißt, neuen oder noch voll funktionstüchtigen gebrauchten Brettern (13) und/oder Kufen (30) bestückt und diese Bretter (13) und/oder Kufen (30) gleichzeitig oder in einem gesonderten Arbeitsgang ausgerichtet. Schließlich werden die zugefügten Bretter (13) und/oder Kufen (30) an der Palette (10) befestigt, insbesondere angenagelt. Dieses geschieht automatisch durch eine Vorrichtung mit einer Demontagestation (29), einer Bestückungsstation (34) und einer Nagelstation (38).

## Beschreibung

Die Erfindung betrifft ein Verfahren und eine Vorrichtung zum Reparieren beschädigter Paletten aus Holz, insbesondere Europaletten.

Aus der DE 44 35 574 C1 ist eine Vorrichtung zur teilweisen oder vollständigen Demontage von defekten Holzpaletten bekannt. Mit dieser Vorrichtung ist es möglich, beschädigte Kufen oder Deckbretter von Holzpaletten, insbesondere Europaletten, automatisch abzutrennen. Die beschädigten Kufen oder Deckbretter werden abgetrennt, indem die Europaletten durch ein Messersystem gedruckt werden. Dabei werden Nägel, mit denen die Deckbretter oder Kufen vernagelt sind, durchtrennt. Die Vorrichtung nach dem Stand der Technik beschränkt sich auf das reine Abtrennen der beschädigten Teile. Wie die abgetrennten, beschädigten Teile durch neue, intakte Teile ersetzt und die Palette so vollständig repariert werden kann, bleibt offen.

Der vorliegenden Erfindung liegt das Problem zugrunde, ein Verfahren und eine Vorrichtung zu schaffen, durch das beschädigte Paletten aus Holz weitestgehend automatisch repariert werden können.

Zur Lösung dieses Problems weist das erfindungsgemäße Verfahren die Verfahrensschritte gemäß Anspruch 1 und die erfindungsgemäße Vorrichtung die Ausbildungsmerkmale gemäß Anspruch 10 auf.

Erfindungsgemäß werden zunächst vorbestimmte, beschädigte Bretter und/oder Kufen abgetrennt. Dieses kann beispielsweise mit einer Vorrichtung nach der DE 44 35 574 C1 erfolgen. Nachdem die abgetrennten Bretter und/oder Kufen aus dem Arbeitsbereich ausgeschleust worden sind, werden die abgetrennten Bretter und/oder Kufen durch neue Bretter und/oder Kufen ersetzt. Gleichzeitig oder in einem gesonderten Arbeitsgang werden die neu hinzugefügten Teile ausgerichtet. Dieses kann entweder dadurch geschehen, daß die teildemontierte Palette positionsgerecht mit neuen Teilen bestückt wird. Alternativ können die neuen Teile auch grob positioniert auf der teildemontierten Palette aufgelegt und anschließend in einer gesonderten Station positioniert werden. Schließlich werden die neu hinzugefügten Teile mit der teildemontierten Palette vernagelt. Die Palette ist nun vollständig repariert.

Besonders vorteilhaft ist es, wenn abgetrennte, beschädigte Kufen in einem gesonderten Arbeitsgang repariert und anschließend wieder zur Reparatur defekter Paletten verwendet werden. Bei der Palettenreparatur entsteht so minimaler Abfall, der entsorgt werden muß. Nach der Kufenreparatur können diese einem Kufenmagazin zugeführt werden, aus dem die Kufen zum Bestücken der teildemontierten Paletten entnommen werden.

Nach einer Weiterbildung der Erfindung werden die beschädigten Paletten stapelweise zugeführt und anschließend vereinzelt. Anschließend können sie einem Begutachtungsplatz zugeführt werden, in dem visuell die Schäden an der zu reparierenden Palette festgestellt werden. Dies kann durch eine Bedienperson oder auch vollautomatisch durch eine Überwachungskamera und entsprechende Bilderkennungssysteme oder andere Palettenkontrollgeräte geschehen. Werden bei der Begutachtung unbeschädigte Paletten oder zu stark beschädigte Paletten erkannt, ist es zweckmäßig, diese aus dem Reparaturprozeß auszuschleusen. Leerläufe in der Anlage werden hierdurch vermieden. Außerdem können zu stark beschädigte Paletten gegebenenfalls zu Störungen in der Reparaturanlage führen. Selbstverständlich kann die Anlage aber auch so eingestellt werden, daß unbeschädigte Paletten unbearbeitet die Reparaturanlage durchlaufen.

Nachdem die Paletten teildemontiert, also beschädigte Teile abgetrennt worden sind, ist es vorteilhaft, diese zunächst in einem Palettenpuffer zwischenzuspeichern. Hierdurch kann ein Demontagebereich und ein Montagebereich für die Palettenreparatur voneinander abgetrennt werden, so daß bei eventuellen Störungen in einem der Bereiche der jeweils andere weiterlaufen kann.

Beim Abtrennen der beschädigten Teile kann es dazu kommen, daß Holzsplitter auf der teildemontierten Palette zurückbleiben oder die Nägel nicht vollständig durchtrennt, sondern die beschädigten Teile nur von diesen abgezogen werden. Dies kann dazu führen, daß die neu hinzugefügten Kufen und/oder Bretter nicht vollständig an der teildemontierten Palette anliegen. Nach einer Weiterbildung der Erfindung wird daher vorgeschlagen, die neu hinzugefügten Teile nach der Nagelung anzupressen. Die neu hinzugefügten Teile liegen dann vollständig an.

Nach der Reparatur ist es zweckmäßig, die Paletten zu stapeln und in einem Magazin zum Abtransport bereitzustellen.

Weitere Merkmale der Erfindung beziehen sich auf Ausgestaltungen der einzelnen Stationen zur Durchführung des erfindungsgemäßen Verfahrens bzw. der erfindungsgemäßen Vorrichtung.

Die Erfindung wird nachfolgend anhand der Zeichnungen näher erläutert. In diesen zeigen:
- Fig. 1: eine Palettenreparaturanlage mit den Erfindungsmerkmalen in Draufsicht,
- Fig. 2: eine Seitenansicht einer Kufenbestückungsstation mit Kufenmagazin,
- Fig. 3: einen Schnitt durch die Kufenreparaturstation gemäß Fig. 2 in der Ebene III - III,
- Fig. 4: eine Brettbestückungsstation in Seitenansicht,
- Fig. 5: einen Schnitt durch die Brettbestückungsstation gemäß Fig. 4 in der Ebene V - V,
- Fig. 6: eine Zentrierstation in Draufsicht,
- Fig. 7: einen Schnitt durch die Zentrierstation gemäß Fig. 6 in der Ebene VII - VII,
- Fig. 8: eine Kufenreparaturstation in Seitenansicht,
- Fig. 9: die Kufenreparaturstation gemäß Fig. 8 in Draufsicht,
- Fig. 10: ein Detail der Kufenreparaturstation gemäß Fig. 9,
- Fig. 11: einen Bereich eines Palettenmagazins für die Anlage gemäß Fig. 1 in Seitenansicht,
- Fig. 12: den Bereich des Palettenmagazins gemäß Fig. 11 in einer anderen Arbeitsstellung,
- Fig. 13: ein Detail des Palettenmagazins gemäß Fig. 11.

Europaletten 10 aus Holz weisen neun, in drei Längs- und Querreihen angeordnete Klötze 11 auf. In Längsrichtung ist unter jeweils drei der Klötze einer Reihe ein Bodenbrett 12 genagelt. Insgesamt sind also drei Bodenbretter 12 vorhanden. In Querrichtung sind auf die Klötze 11, also auf der den Bodenbrettern 12 gegenüberliegenden Seiten der Klötze 11, Querbretter 13 angeordnet. Die Querbretter 13 liegen wiederum auf jeweils drei der Klötze 11 auf. Auf den Querbrettern 13 liegen wiederum in Längsrichtung insgesamt fünf Deckbretter 14 auf. Die beiden äußeren Deckbretter 14 und das mittlere Deckbrett 14 liegen dabei oberhalb der Bodenbretter 12 auf den Querbrettern 13 auf. Die Querbretter 13 werden zusammen mit diesen Deckbrettern 14 an den Klötzen 11 festgenagelt. Die beiden übrigen, etwas schmaleren Deckbretter 14 werden lediglich an den Querbrettern 13 festgenagelt.

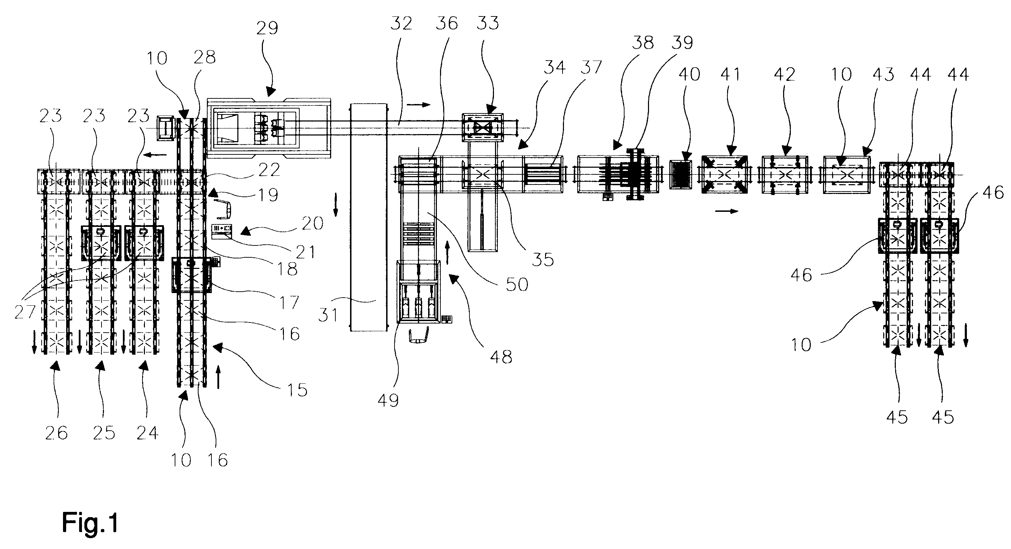

Durch den Gebrauch der Europalette 10 kommt es häufig dazu, daß einzelne Klötze 11 oder einzelne Bretter 12,13,14 beschädigt werden. Die beschädigten Paletten werden dann im allgemeinen durch Austauschen der entsprechenden Teile repariert. Eine Anlage für eine derartige, automatische Palettenreparatur ist in Fig. 1 näher gezeigt.

Die zu reparierenden Paletten 10 werden stapelweise auf einem Zuförderer 15, beispielsweise mittels einem Gabelstapler, abgesetzt. Der Zuförderer 15 ist im vorliegenden Fall als Kettenförderer ausgebildet und umfaßt drei Stellplätze 16 für Stapel von zu reparierenden Paletten 10. Durch den Zuförderer 15 werden die Palettenstapel in einem Entstapler 17 vereinzelt. Hierzu wird ein kompletter Stapel von Paletten 10 in den Entstapler 17 gefördert. Anschließend wird der Palettenstapel durch einen von unten in den Stapel eingreifenden Hubtisch bis in Endposition eines den Hubtisch anhebenden Zylinders hochgehoben. Beim Ablassen des Stapels greifen an einer bestimmten Position seitlich vier Halter in die zweitunterste Palette von unten ein, so daß diese beim weiteren Absenken des Stapels auf den Haltern aufliegt. Die unterste Palette 10 wird weiter abgesenkt, bis sie auf einem Förderer aufliegt. Sie wird hier durch einen Stopper in ihrer Position gehalten. Sobald der Stopper freigegeben wird, wird die Palette 10 aus dem Bereich des Entstaplers 17 herausgefördert. Nun fährt der Hubtisch erneut bis in seine Endposition hoch und hebt den verbleibenden Reststapel von Paletten 10 aus den Haltern heraus. Die Halter klappen sodann zurück und der Stapel wird erneut abgesenkt. Die Halter greifen nun wiederum in die jetzt an zweitunterster Position befindliche Palette 10 von unten ein. Die unterste Palette 10 wird wieder auf dem Förderer abgesenkt und kann herausgefördert werden. Dieser Vorgang wiederholt sich, bis daß der gesamte Stapel von Paletten 10 vereinzelt ist. Nun kann ein neuer Palettenstapel in den Entstapler 17 eingefördert werden.

Alternativ zu den vier, in den Palettenstapel einschwenkbaren Haltern ist auch folgende Konstruktion möglich. Zu beiden Längsseiten des Palettenstapels sind auf der Höhe der zweituntersten Palette 10 je ein Tragbalken angeordnet. Diese Tragbalken sind von einer von der zweituntersten Palette 10 entfernten Grundposition in eine Eingriffsposition unmittelbar neben der zweituntersten Palette 10 bewegbar, vorzugsweise schwenkbar. An jedem der beiden Tragbalken sind sechs federbelastete Haltebolzen angeordnet. Bei der Bewegung der Tragbalken in die Halteposition greifen diese Haltebolzen je nach Positionierung der Palette unter die äußeren Querbretter 13 bzw. Deckbretter 14 der Palette 10. Stößt einer oder mehrere der federbelasteten Haltebolzen dabei gegen einen Klotz 11 werden sie gegen die Federlast in den Tragbalken hineingedrückt. Konkret sind die Haltebolzen so angeordnet, daß jeweils die beiden äußeren Haltebolzen bei korrekt positionierten Klötzen 11 an den Ecken der Palette gegen diese stoßen und zurückgedrückt werden. Sind eine oder mehrere der Klötze 11 an den Ecken der Palette 10 jedoch verschoben, halten diese die Palette und ein anderer Haltebolzen wird gegebenenfalls zurückgedrückt. Hierdurch wird der Palettenstapel immer sicher auf einer ausreichenden Anzahl von Haltebolzen getragen, so daß eine Gefahr des Umsturzes des Palettenstapels nicht besteht.

An einem Gestell für den Entstapler 17 sind zwei pneumatisch angetriebene Klappen angebracht. Diese verhindern zusätzlich, daß der Palettenstapel, der sich gerade im Entstapler 17 befindet, umkippen kann. Nachdem die letzte Palette 10 des vorangegangenen Stapels aus dem Bereich des Entstaplers 17 herausgefördert worden ist, werden zwei Klappen mittels Pneumatikzylindern geöffnet. Ein neuer Palettenstapel kann nun in den Entstapler 17 hineingefördert werden. Die Klappen schließen sich gleichzeitig mit dem Hub des Hubtisches. Der Stapel ist nun gegen Umstürzen gesichert. Sensoren zeigen den geöffneten Zustand der Klappen an. Hierdurch wird verhindert, daß ein neuer Palettenstapel gegen geschlossene Klappen fährt.

Im Anschluß an den Entstapler 17 gelangen die zu reparierenden Paletten auf einen Zwischenplatz 18. Im Bereich dieses Zwischenplatzes 18 befindet sich eine an Schlitten verfahrbare Kreissäge. Hierdurch können stark beschädigte und von der Palette 10 abstehende bzw. eingedrückte Abschnitte der Bretter 12, 13 oder 14 durchtrennt und manuell entfernt werden. Hierdurch werden Störungen in den nachfolgenden Anlagenteilen vermieden.

Die Palette 10 gelangt nun in eine Begutachtungsstation 19. Im gezeigten Ausführungsbeispiel wird hier durch eine Bedienperson 20 festgestellt, welche Teile an der Palette 10 beschädigt sind. Dies wird in ein Bedienpult 21 eingegeben, welches über eine SPS-Steuerung die nachfolgende Anlage steuert. Alternativ können hier die Schäden auch durch ein Kamerasystem erfaßt und mittels einer automatischen Bildverarbeitung oder durch ein anderes Palettenkontrollgerät die Daten der beschädigten Teile in die SPS-Steuerung eingespeist werden.

Stellt sich in der Begutachtungsstation 19 heraus, daß versehentlich eine vollständig intakte Palette 10 oder eine zu stark beschädigte Palette 10 vorliegt, wird dieses ebenfalls entsprechend erfaßt. Diese Paletten können nun auf einer nachfolgenden Palettenweiche 22, in Fig. 1 nach links, ausgeschleust werden. Der Palettenweiche 22 sind weitere Palettenweichen 23 nachgeordnet, auf denen die vollständig intakten von den "Schrott"-Paletten getrennt und auf gesonderten Linien 24, 25 und 26 sortiert bereitgestellt werden. Im vorliegenden Fall weisen die Linien 24 und 25 noch Palettenstapler 27 auf, durch die die vereinzelten Paletten 10 wieder zu Stapeln zusammengestellt werden können.

Beschädigte, zu reparierende Paletten 10 werden von der Palettenweiche 22 zu einem Übergabeplatz 28 gefördert. Die Paletten 10 werden hier mittels eines Formteils in die nachfolgende Demontagestation 29 eingeschoben. Die Demontagestation kann im wesentlichen der in der DE 44 35 574 C1 beschriebenen Vorrichtung entsprechen. Hier werden die beschädigten Paletten 10 selektiv demontiert. Konkret werden vorbestimmte Deckbretter 14 und/oder vorbestimmte, aus jeweils einem Bodenbrett 12 und den zu diesem Bodenbrett 12 gehörenden drei Klötzen 11 gebildete Kufen 30 abgetrennt. Die abgetrennten Deckbretter 14 und/oder Kufen 30 gelangen durch eine Rutsche oder Kanal auf einen Gurtförderer 31 und werden von diesem seitlich weggefördert.

Durch einen Demontageförderer 32 werden die teildemontierten Paletten 10 von der Demontagestation 29 abgefördert. Der Demontageförderer 32 ist ein zweireihiger Kettenförderer mit mehreren, in einem Abstand von ca. 1,85 Metern angeordneten Mitnehmern. Von dem Demontageförderer 32 werden die teildemontierten Paletten 10 zu einem Palettenmagazin 33 gefördert. Hier können mehrere teildemontierte Paletten 10 zwischengespeichert werden.

Aus dem Palettenmagazin 33 werden die teildemontierten Paletten 10 entnommen und einer Bestückungsstation 34 zugeführt. Die Bestückungsstation weist einen mittleren Übergabeplatz 35 und - im vorliegenden Fall links davon - eine Kufenbestückungsstation 36 sowie rechts vom Übergabeplatz 35 eine Brettbestückungsstation 37 auf. In der Kufenbestückungsstation 36 werden gegebenenfalls abgetrennte Kufen 30 durch neue bzw. reparierte Kufen 30 ersetzt. In entsprechender Weise werden in der Brettbestückungsstation 37 abgetrennte Deckbretter 14 durch neue ersetzt. Die genaue Arbeitsweise der Kufenbestückungsstation 36 und der Brettbestückungsstation 37 werden weiter unten noch genauer erläutert.

Die insoweit komplettierte Palette 10 wird nun einer Zentrier- und Nagelstation 38 zugeführt. In der Zentrier- und Nagelstation 38 werden die neu zugefügten Bretter 14 und/oder Kufen 30 zentriert, das heißt, exakt auf der teildemontierten Palette 10 positioniert. Die ersetzten Deckbretter 14 und/oder Kufen 30 werden dabei automatisch in die vorgesehene Position gebracht. Die Palette 10 stoppt hier und kann manuell vernagelt werden. Alternativ kann auch eine automatische Nagelung erfolgen. Hierzu kann über der Zentrier- und Nagelstation 38 eine Brücke 39 mit einem quer verfahrbaren Schußapparat oder fünf, jedem Deckbrett 14 zugeordnete Schußapparate angeordnet sein. Alternativ können auch alle, zu einem Querbrett 13 gehörende Nägel gleichzeitig eingetrieben werden. Befindet sich die Palette 10 mit ihrem ersten Querbrett 13 unter der Brücke 39, werden selektiv die ersetzten Deckbretter 14 und/oder Kufen 30 vernagelt. Die Palette 10 wird nun weitergefördert, bis sich das zweite Querbrett 13 unter der Brücke 39 befindet. Hier werden die erforderlichen Nagelungen durchgeführt. Sodann wiederholt sich der Vorgang für das dritte Querbrett 13.

Von der Zentrier- und Nagelstation 38 gelangen die genagelten Paletten 10 in eine Anpreßstation 40. In der Anpreßstation 40 werden eventuell überstehende Nägel sowie nicht ganz anliegende Bretter 12, 13, 14 oder Kufen 30 nach der Nagelung angepreßt. Hierzu sind im Bereich der Querbretter 13 fünf einzelne Pneumatikzylinder angeordnet, die die Palette 10 zusammenpressen. An den Kolbenstangen dieser Pneumatikzylinder sind fünf Metallräder angeordnet, die auf die Palette 10 abgesenkt werden. Durch eine Lichtschranke wird das Vorhandensein eines Querbretts 13 unter den Metallrädern sensiert. Die Pneumatikzylinder werden sodann mit Druckluft beaufschlagt und so die Metallräder auf die Palette gedrückt. Sobald das Querbrett 13 aus dem Bereich der Lichtschranke herausgefahren ist und so die Lichtschranke wieder freigegeben worden ist, werden die Pneumatikzylinder mit einer Nachlaufzeit von 0,2 Sekunden drucklos geschaltet.

Von der Anpreßstation 40 gelangen die Paletten 10 in eine Eckensägestation 41. Diese dient zum Kappen von seitlichen Deckbrettern 14, Klötzen 11 und Bodenbrettern 12 der Palette 10. Die Paletten 10 werden somit in Draufsicht an ihren senkrechten Kanten angefast. Im Anschluß an die Eckensägestation 41 befindet sich eine Brennstation 42. Hier werden Embleme, wie beispielsweise das DIN-Symbol, in einige der Klötze 11 eingebrannt.

Die insoweit fertig reparierte Palette 10 hat nun noch eine Kontrollstation 43 zu durchlaufen, bevor sie über zwei nacheinander angeordnete Palettenweichen auf zwei Abförderer 45 verteilt werden. Im Bereich der Abförderer 45 befinden sich jeweils ein Palettenstapler 46, durch die die einzelnen Paletten 10 wieder zu Palettenstapeln zusammengefaßt werden. Diese werden auf im vorliegenden Falle jeweils drei Bereitstellungsplätzen 47 je Abförderer 45 zum Abtransport bereitgestellt.

Weiterhin ist in Fig. 1 noch eine Kufenreparaturstation 48 erkennbar. Diese umfaßt einen Kufenreparaturplatz 49 und ein Kufenmagazin 50. Man erkennt in Fig. 1, daß durch den Gurtförderer 41 die abgetrennten Teile parallel zur Kufenreparaturstation 48 in einem Bereich neben den Kufenreparaturplatz 49 gefördert werden. Eine Bedienperson kann hier beschädigte Kufen herausgreifen und am Kufenreparaturplatz 49 reparieren. Die reparierten Kufen gibt die Bedienperson sodann in das Kufenmagazin 50, durch welches sie zur Kufenbestückungsstation 36 gefördert und zum Austausch abgetrennter Kufen 30 bereitgestellt werden.

Die einzelnen Stationen der insoweit grob beschriebenen Anlage werden nachfolgend genauer beschrieben.

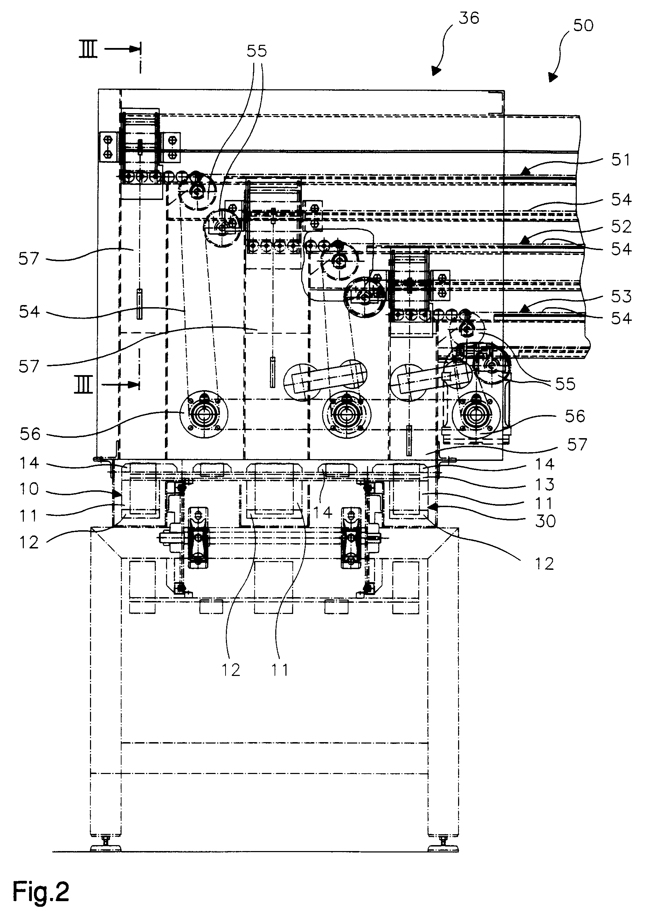

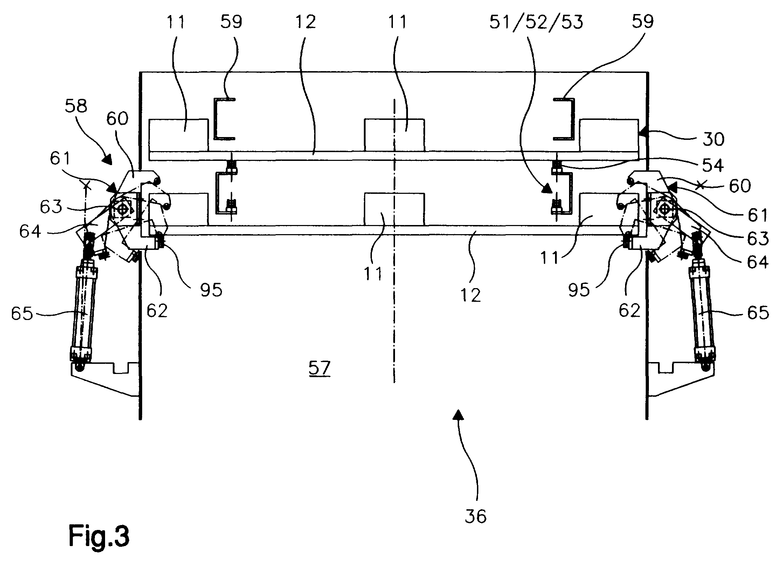

In Fig. 2 und 3 ist die Kufenbestückungsstation 36 mit dem der Kufenbestückungsstation 36 zugeordneten Ende des Kufenmagazins 50 näher gezeigt. Das Kufenmagazin 50 weist drei übereinander angeordnete Kufenförderer 51,52 und 53 auf. Jeder Kufenförderer 51..53 ist dabei einer Position der Kufen 30 der Palette 10 zugeordnet. In dem oberen Kufenförderer 51 befinden sich somit die Kufen 30 der ganz linken Position an der Palette 10, im mittleren Förderer 52 die Kufen 30 der mittleren Position und im untersten Förderer 53 die Kufen der rechten Position gemäß Darstellung in Fig. 2. Im Kufenmagazin 50 befinden sich immer neue oder gebrauchte, reparierte Kufen 30 in ausreichender Zahl.

Die einzelnen Kufenförderer 51..53 sind als Kettenförderer ausgebildet mit zwei nebeneinander angeordneten Förderketten 54. Trums der Ketten 54 werden über Umlenkräder 55 nach unten abgelenkt. Die Förderketten 54 werden hier über Antriebsritzel durch einen Elektromotor 56 angetrieben.

Die Kufenförderer 51 reichen jeweils bis in den Bereich eines Abwurfkanals 57. Die Kufen 30 werden hier auf eine Abwurfeinrichtung 58 aufgeschoben. Diese ist in Fig. 3 näher zu erkennen. Die auf dem Obertrum der Förderkette 54 ruhenden und durch Leitprofile 59 zentrierten Kufen 30 werden von dem Kufenförderer 51..53 auf eine Abwurfklaue 61 abgelegt. Zwischen einem oberen Schenkel 60 und einem unteren Schenkel 62 der Abwurfklaue 61 befindet sich die nächste für die Palettenreparatur vorgesehene Kufe 30. Die Abwurfklauen 61 sind durch ein Gelenk 63 gelenkig gelagert und über einen Hebel 64 mittels einem Pneumatikzylinder 65 kippbar. Durch Ausfahren der Pneumatikzylinder 65 werden die unteren Schenkel 62 nach außen geschwenkt und geben die Kufe 30 frei. Zusätzlich wird die Kufe 30 durch den oberen Schenkel 60 zwangsweise nach unten gedrückt. Diese fällt nun durch den Abwurfkanal 57 nach unten und liegt für eine zu reparierende Palette 10 bereit. Die Pneumatikzylinder 65 werden nun vollständig eingefahren, so daß die oberen Schenkel 60 nach außen geschwenkt werden. Sodann wird die nächste Kufe 30 vom Kufenförderer 51..53 zugeführt und dabei auf den unteren Schenkel 62 aufgefördert. Der untere Schenkel 60 weist zu diesem Zweck an seiner freien Stirnseite Rollen 95 auf. Der gesamte Vorgang wird durch Lichtschranken überwacht, die die korrekte Positionierung der Kufen 30 anzeigen. Hierdurch wird verhindert, daß eine im Abwurfkanal 57 nach unten fallende Kufe 30 durch nachfolgende Kufen 30 behindert wird.

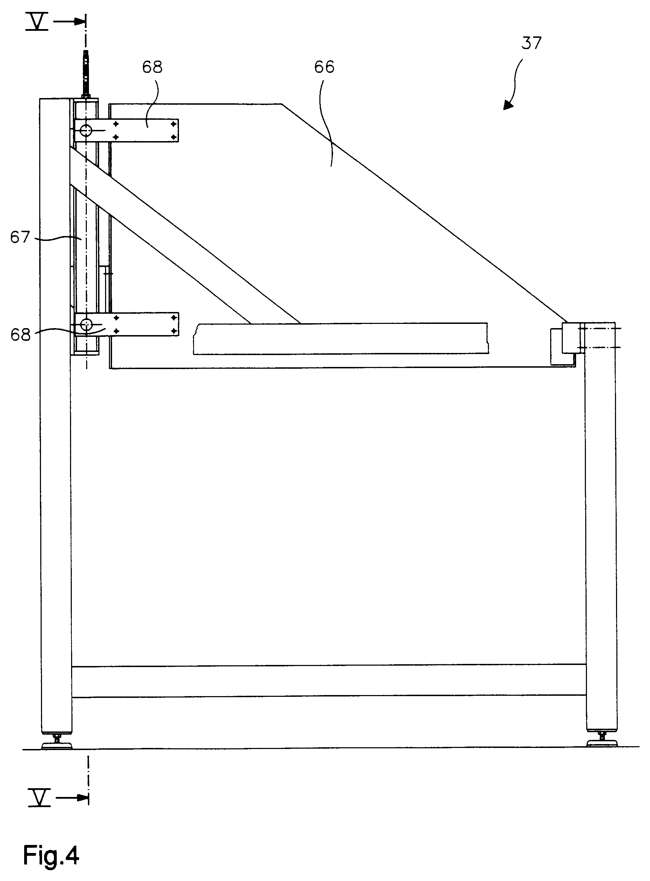

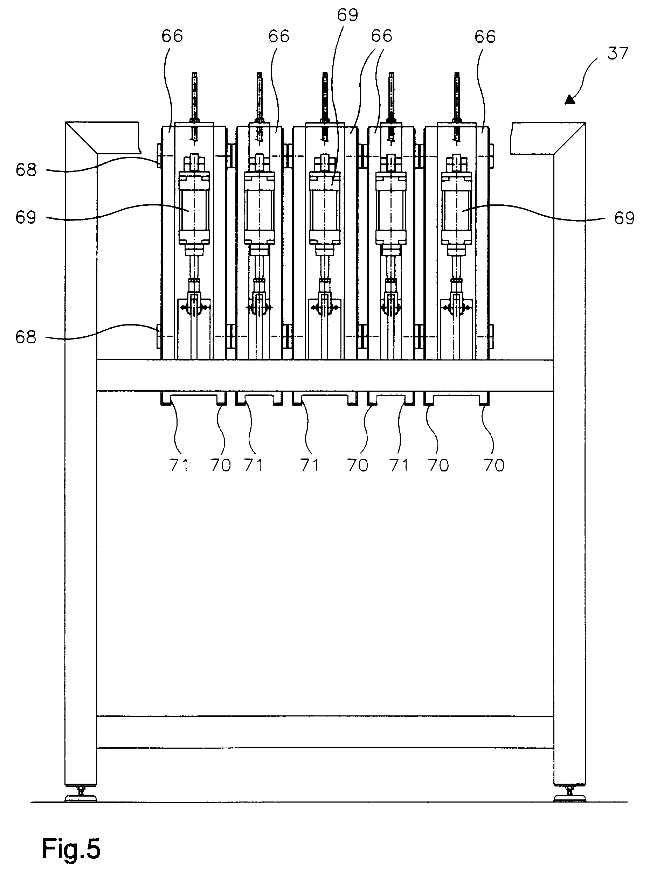

Die Brettbestückungsstation 37 ist in den Fig. 4 und 5 näher gezeigt. Die Brettbestückungsstation 37 dient, wie gesagt, zum automatischen Ersetzen der abgetrennten oder fehlenden Deckbretter 14. Die Brettbestückungsstation 37 weist hierfür mehrere, nämlich fünf, Brettmagazine 66 auf. Die Brettmagazine 66 fassen etwa zwanzig bis vierzig Bretter, je nach Ausführung. Sie sind jeweils oberhalb der entsprechenden Brettposition in Längsrichtung angeordnet. Jedes Brettmagazin 66 ist in Linearführungen 67 mittels Haltern 68 und ca. 30 Millimeter vertikal verschiebbar gelagert. Zu diesem Zweck sind jedem Brettmagazin 66 ein Pneumatikzylinder 69 zugeordnet. Wird für die Reparatur einer Palette 10 innerhalb der Brettbestückungsstation 37 ein Deckbrett 14 angefordert, wird das Brettmagazin 66 für die entsprechende Brettposition abgesenkt. Die Palette 10 wird nun vollständig unter dem Magazin hindurchgeschoben und das unterste Deckbrett 14 im Brettmagazin 66 durch einen Mitnehmer am Kettenförderer für die Palette 10 aus dem Brettmagazin 66 mitgenommen und so in richtiger Position auf der Palette 10 abgelegt. Die Brettmagazine 66 weisen an ihrem unteren Ende zu diesem Zweck nach innen gerichtete Schenkel 70 auf, auf denen das Deckbrett 14 aufliegt. An ihrer Stirnseite sind die Brettmagazine 66 im unteren Bereich offen und weisen zudem eine Ausnehmung 71 auf, durch die die Mitnehmer der Kettenförderer für die zu reparierende Palette 10 hindurchfahren können.

Nachdem das Deckbrett bzw. die Deckbretter 14 auf der Palette 10 abgelegt worden sind, also aus den jeweiligen Brettmagazinen 66 ausgeschoben worden sind, werden die abgesenkten Brettmagazine 66 wieder in ihre Ausgangsstellung angehoben. Ein geeigneter Sensor überwacht, ob ständig eine genügende Anzahl neuer Deckbretter 14 im Brettmagazin 66 vorhanden ist. Wird eine vorbestimmte Mindestzahl unterschritten, wird durch den Sensor ein akustisches oder optisches Signal gegeben, so daß eine Bedienperson das jeweilige Brettmagazin 66 auffüllen kann.

In analoger Weise wie die Brettbestückungsstation 37 für Deckbretter 14 kann auch eine Bestückungsstation für Querbretter 13 ausgebildet sein. Diese wäre lediglich um 90° versetzt zur Kufenbestückungsstation 36 und Brettbestückungsstation 37 zwischen diesen beiden Stationen angeordnet. Durch eine Bestückungsstation für Querbretter 13 würden zunächst die Querbretter 13 auf den Kufen 30, nämlich den Klötzen 11, abgelegt und sodann die Deckbretter 14 aufgelegt werden. Dazu sind dann auf der Förderkette des Kettenförderers entsprechende Mitnehmer angebracht, die die Querbretter 13 an den entsprechenden Positionen aus dem Magazin entnehmen. Mit der Anlage können so auch neue Paletten hergestellt werden.

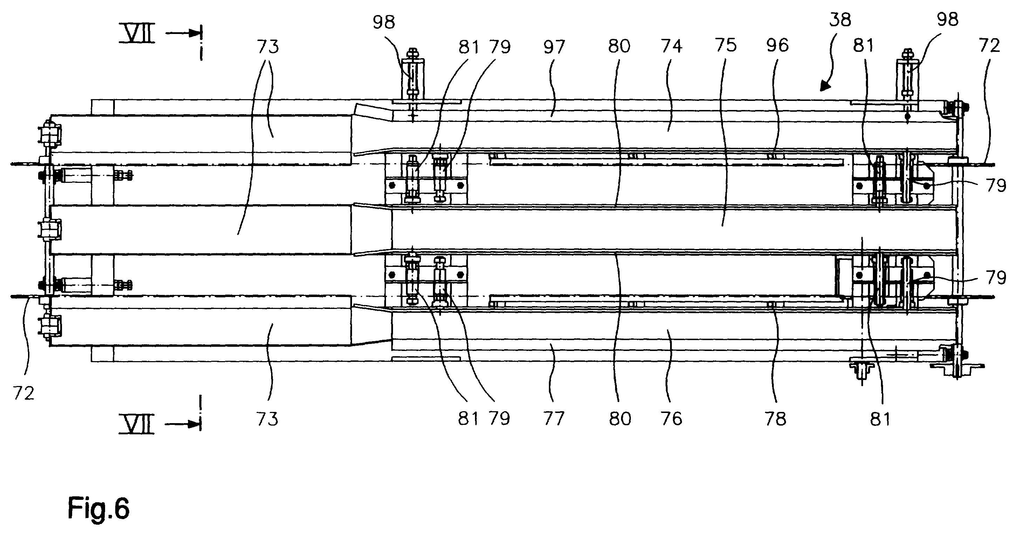

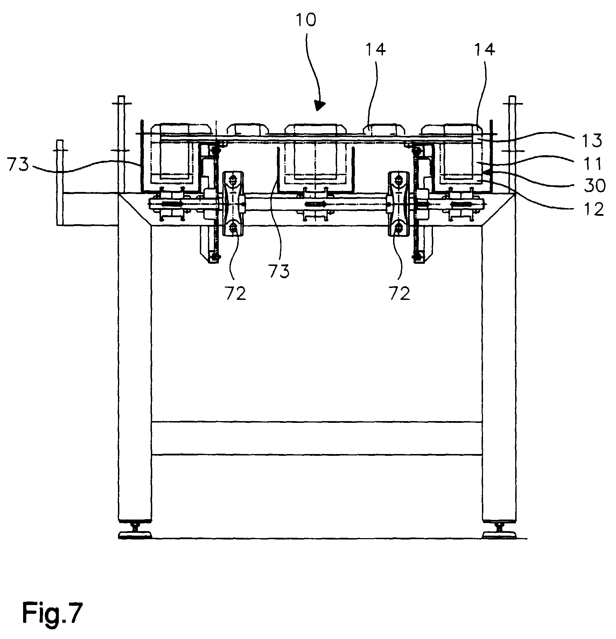

In den Fig. 6 und 7 ist die Zentrierstation zum exakten Positionieren der ersetzten Kufen 30 bzw. Deckbretter 14 näher gezeigt. Durch denselben Kettenförderer, dessen beiden Förderketten 72 in Fig. 6 erkennbar sind, mit dem die zu reparierende Palette 10 bereits durch die übrigen Stationen 35,36 und 37 gefördert worden ist, wird die Palette in die Zentrierstation eingeführt. Die Kufen 30 der Palette 10 gelangen durch Einführkanäle 73 in Zentrierkanäle 74, 75 und 76. Der rechte Zentrierkanal 76 weist eine feste Außenwand 77 und eine bewegliche Innenwand 78 auf. Mittels federbelasteter Stößel 79 wird die bewegliche Innenwand 78 nach außen gedrückt und so die Kufen 30 gegen die feststehende Außenwand 77 positioniert.

Der mittlere Zentrierkanal 75 weist zwei bewegliche Wände 80 auf, die ebenfalls über federbelastete Stößel 81 nach innen gedrückt werden. Die Federkräfte sind dabei so ausgelegt, daß die mittlere Kufe 30 relativ zur festen, rechten Außenwand 77 exakt positioniert wird.

Der linke Zentrierkanal 74 weist eine bewegliche Innenwand 96 analog zur beweglichen Innenwand 78 des rechten Kanals 76 auf. Die bewegliche Innenwand 96 des Zentrierkanals 74 ist ebenfalls durch federbelastete Stößel 79 belastet. Ferner weist der Zentrierkanal 74 eine bewegliche Außenwand 97 auf, die durch federbelastete Stößel 98 nach rechts in Richtung auf die feste Außenwand 77 gedrückt wird. Die bewegliche Außenwand 97 ist höher ausgebildet als eine Palette 10. Hierdurch wird die gesamte Palette 10 mitsamt ihrer linken Kufe 30 in Richtung auf die feste Außenwand 77 gedrückt und so exakt positioniert.

Durch eine analoge Einrichtung werden die Deckbretter 14 ebenfalls positioniert. Die nun korrekt ausgerichtete Palette 10 kann innerhalb der Zentrier- und Nagelstation 38 in der oben beschriebenen Weise genagelt werden.

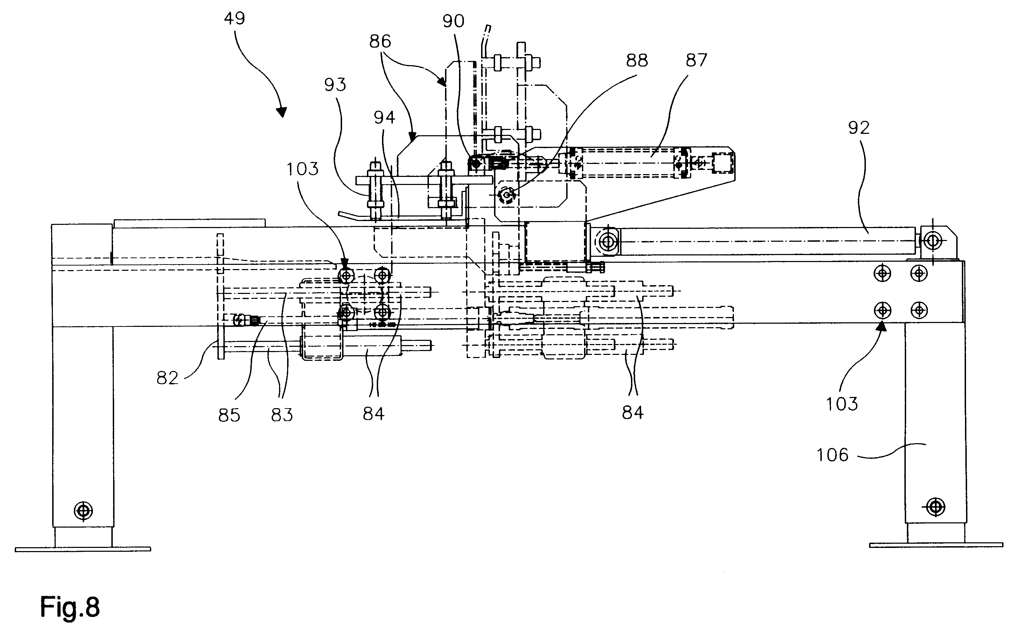

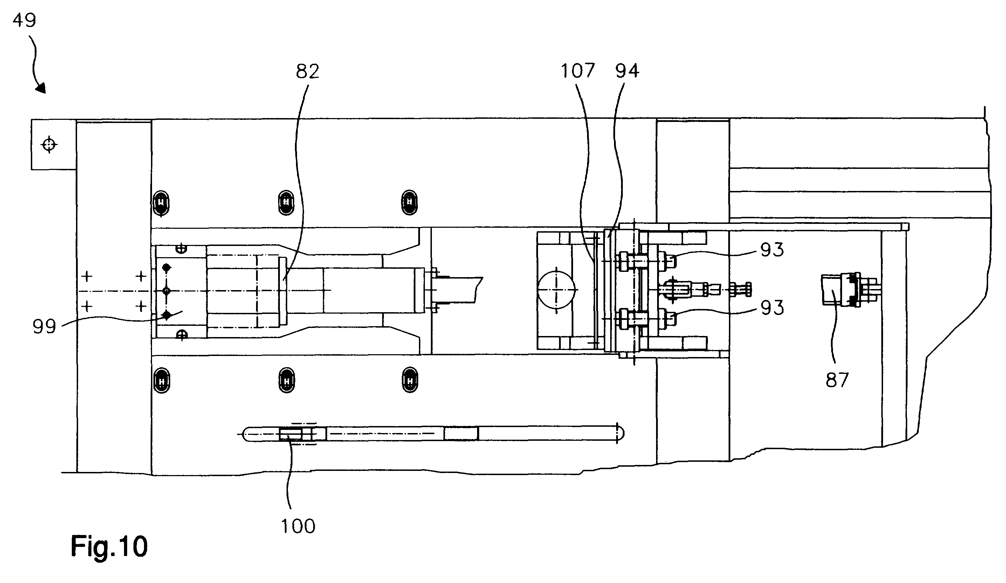

Anhand von Fig. 8 bis 10 wird nun der Kufenreparaturplatz 49 näher beschrieben. In den Kufenreparaturplatz 49 werden die Kufen 30 mit den Klötzen 11 nach unten eingelegt. Durch je eine hydraulisch betätigbare Klemme 82, die mit einer feststehenden Backe 99 zusammenwirkt, werden jeweils die Klötze 11 festgeklemmt, die unbeschädigt sind und somit weiterverwendet werden können. Ein beschädigter und somit auszuwechselnder Klotz 11 wird nicht festgeklemmt, so daß er nach dem Abtrennen nach unten aus dem Kufenreparaturplatz 49 herausfallen kann.

Die Klemme 82 ist an Führungsstangen 83 in einer Linearführung 84 gelagert. Mittels einer Kolbenstange 85 kann die jeweilige Klemme 82 nach rechts geschlossen werden. Das Bodenbrett 12 wird durch Klemmen 100 fixiert, die ebenfalls mit der festen Backe 99 als Gegenorgan zusammenwirken. Zum Abtrennen einzelner Klötze 11 bzw. sämtlicher Klötze 11, also des Bodenbretts 12, werden nun dem abzutrennenden Klotz 11 zugeordnete Messersysteme 86 analog zu den in der DE 44 35 574 C1 beschriebenen Messersystemen heruntergeklappt. Dieses geschieht mittels einem Betätigungszylinder 87, der das jeweilige Messersystem 86 um ein Gelenk 88 nach unten klappt. Eine Kolbenstange 89 des Betätigungszylinders 87 ist zu diesem Zweck bei 90 gelenkig an dem Messersystem 86 angebracht.

Die gesamte Klemmeinrichtung mit den Klemmen 21 und 100 sowie den Backen 99 ist an einem Schlitten 91 verfahrbar gelagert. Der Schlitten 91 weist zu diesem Zweck zu beiden Seiten nach außen offene U-Profile 101 auf, die auf Rollen 102 laufen. Jeder Seite des Schlittens 91 bzw. jedem U-Profile 101 sind jeweils zwei Rollen 102 zugeordnet, von den in Fig. 8 nur die Befestigungen 103 erkennbar sind.

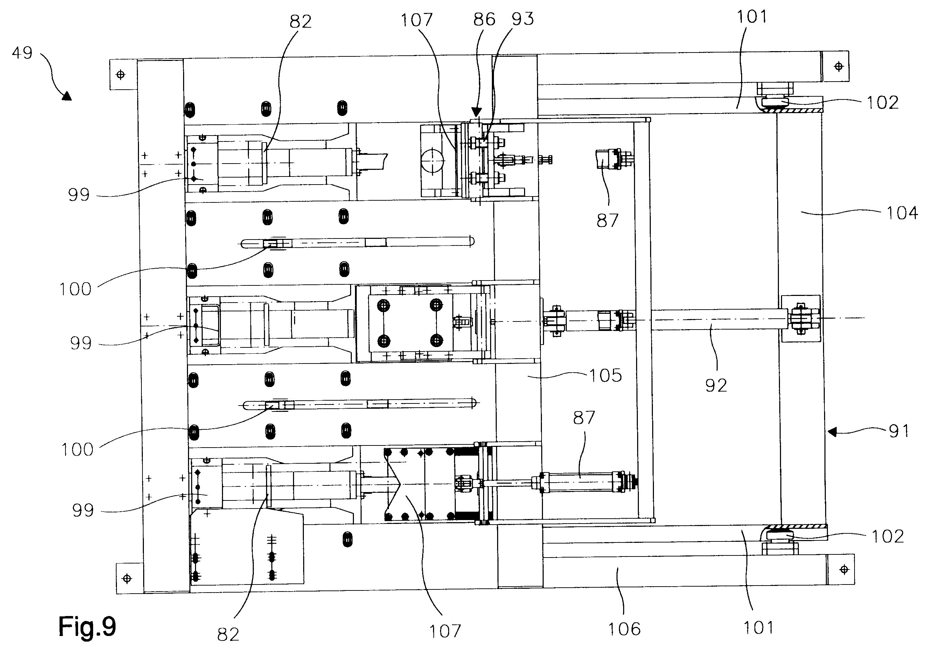

Die beiden U-Profile 101 des Schlittens 91 sind durch eine Quertraverse 104 miteinander verbunden. An der Quertraverse greift eine Kolbenstange eines Hydraulikzylinders 92 an, der an seinem anderen Ende an einer Quertraverse 105, die auch die Messersysteme 86 trägt, angebracht ist. Die Quertraverse 105 ist dabei fest mit einem Gestell 106 des Kufenreparaturplatzes 49 verbunden. Der Hydraulikzylinder 92 drückt nun den Schlitten 91 in den Darstellungen gemäß Fig. 8 und 9 nach rechts, so daß die eingespannte Kufe 30 durch die feststehenden Messersysteme 86 gedrückt wird.

Eine an Federstößeln 93 leicht vertikal verschiebbare Oberführung 94 gleitet während des Abtrennvorgangs über das Bodenbrett 12 und stellt somit die erforderliche Höhe für ein eigentliches Messer 107 (Fig. 9) ein. Durch weiteren Hub des Hydraulikzylinders 92 gelangt das Messer 107 zwischen das Bodenbrett 12 und den Klotz 11 und durchtrennt die Nägel, mit denen die beiden Teile vernagelt sind. Das jeweilige Messersystem 86 wird sodann in die Ausgangsposition zurückgefahren und die Klemmen 82 gelöst. Je nach Beschädigung können nun das Bodenbrett 12 oder der bzw. die jeweiligen Klötze 11 ausgetauscht und die Kufe 30 sodann vernagelt werden.

Die Backen 99 weisen jeweils einen horizontalen Schlitz in Höhe des Messers 107 auf. Die Schlitten 91 können somit immer weit genug verfahren werden, um eine vollständige Abtrennung der Klötze 11 zu gewährleisten. Die Messer 107 fahren dabei in die Schlitze der Backen 99.

Es sei an dieser Stelle darauf hingewiesen, daß immer nur das Messersystem 86 an der Position heruntergeklappt wird, wo eine Kufe 30 abzutrennen ist. Ist beispielsweise bei einer Kufe 30 nur das Bodenbrett 12 beschädigt, werden alle 3 Klötze 11 festgeklemmt und alle drei Messersysteme 86 heruntergeklappt. Das Brett wird nun von den Klötzen durch Verfahren des Schlittens 91 mittels des Zylinders 92 abgetrennt und kann anschließend beispielsweise von einer Bedienperson oder automatisch abgenommen werden. Nach Auflegen eines neuen Bodenbretts 12 wird die Kufe 30 vernagelt. Ist hingegen beispielsweise nur der mittlere Klotz 11 beschädigt, werden nur die beiden äußeren Klötze 11 festgeklemmt und lediglich das mittlere Messersystem 86 heruntergeklappt. Der mittlere Klotz 11 wird nun vom Bodenbrett 12 in der vorbeschriebenen Weise abgetrennt und fällt nach unter aus dem Kufenreparaturplatz 89 heraus. Nach Einsetzen eines neuen Klotzes 11 wird dieser wiederum vernagelt. Ist schließlich beispielsweise das Bodenbrett 12 und der rechte Klotz 11 beschädigt, werden der linke und der mittlere Klotz 11 festgeklemmt und alle drei Messersysteme 86 heruntergeklappt. Das Bodenbrett 12 wird nun in der vorbeschriebenen Weise von alle drei Klötzen 11 abgetrennt, wobei der beschädigte, rechte Klotz 11 nach unten aus dem Kufenreparaturplatz 49 herausfällt. Der beschädigte Klotz 11 sowie das Bodenbrett 12 werden nun ersetzt und die Kufe 30 wieder vernagelt.

Es sei weiterhin angemerkt, daß alternativ auch die Messersysteme 86 verfahren werden können, während die Kufen 30 stillstehen.

Die reparierte Kufe 30 wird von einer Bedienperson sodann in das oberhalb des Kufenreparaturplatzes 49 befindliche Kufenmagazin 50 eingelegt. Die gleiche Bedienperson kann das Kufenmagazin auch mit neuen Kufen bestücken.

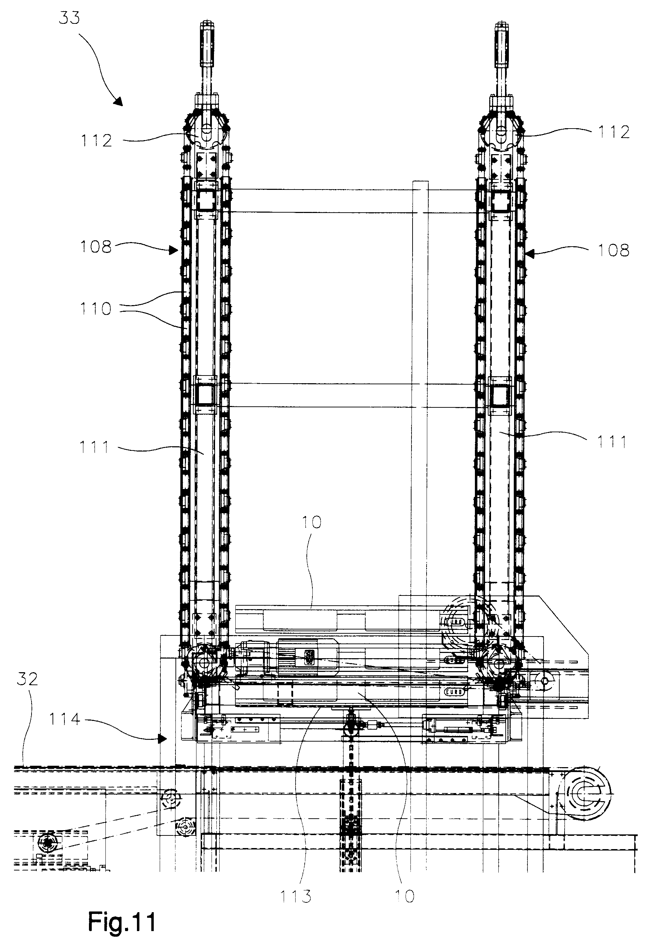

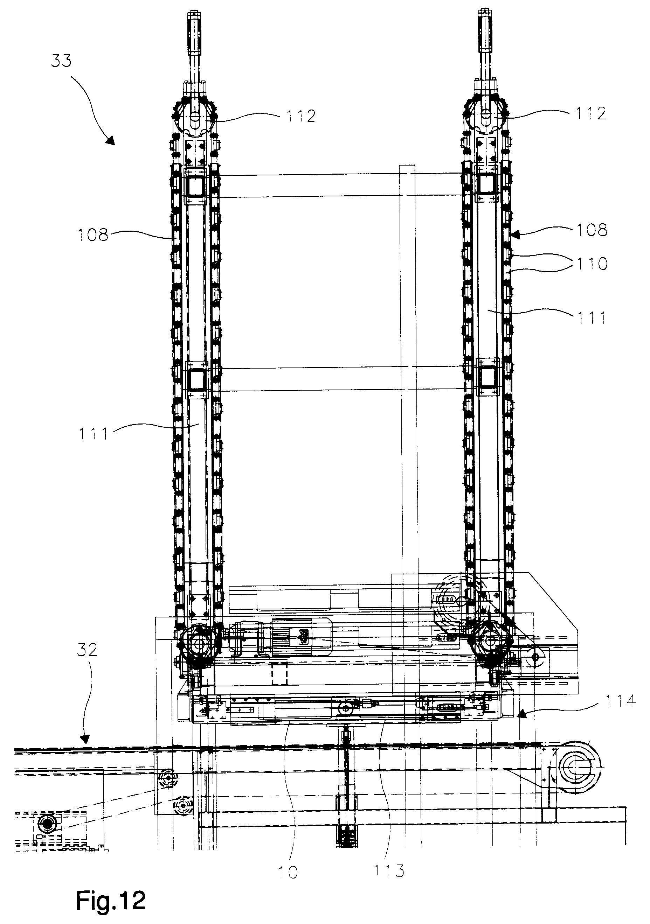

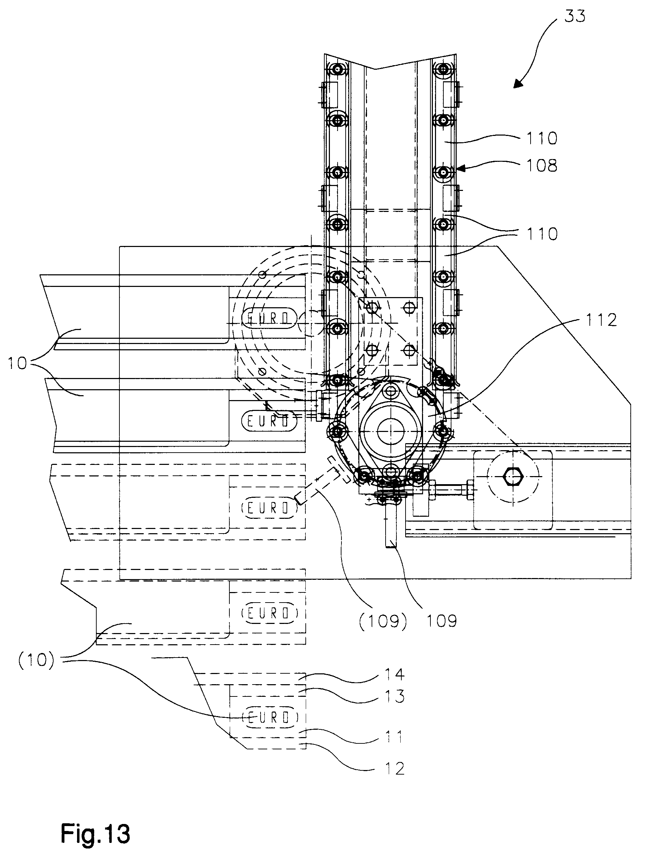

Die Station mit dem Palettenmagazin 33 ist in den Fig. 11 bis 13 genauer gezeigt. Das Palettenmagazin 33 weist jeweils zwei zu beiden Seiten einer Palette angeordnete Förderketten 108 auf. Jeweils auf der Hälfte ihrer Länge, also auf der Länge eines Trums, sind die Förderketten 108 mit Haltern 109 bestückt, auf denen die Paletten 10 im Palettenmagazin 33 aufliegen. Konkret untergreifen die Halter 109 jeweils die an den Stirnseiten befindlichen Querbretter 13. Die Halter 109 sind jeweils an jedem zweiten Kettenglied 110 eines Trums der Förderketten 108 angebracht, wie in Fig. 13 besonders gut zu erkennen ist. Die Förderketten 108 sind jeweils umlaufend an aufrechten Säulen 111 an Kettenritzeln 112 gelagert, von den die unteren Kettenritzel 112 jeweils angetrieben sind. Dabei sind jeweils zwei der Kettenritzel 112 auf einer gemeinsamen Achse angeordnet, wobei die angetriebenen Achsen durch einen gemeinsamen Antrieb angetrieben sind. Konkret ist ein Kettenantrieb mit Trumumkehr vorgesehen, so daß jeweils gegenüber zueinander angeordnete Förderketten 108 gegenläufig angetrieben sind.

Die zwischenzuspeichernden Paletten 10 werden von unter in das Palettenmagazin 33 eingeführt. Die Paletten 10 werden durch den Demontageförderer 32 unter das Palettenmagazin 33 gefördert. Durch einen Hubtisch 113 wird die jeweilige Palette 10 von dem Demontageförderer 32 abgehoben und in einem Bereich knapp unterhalb des Palettenmagazins 33, nämlich etwa auf die Ebene der unteren Kettenritzel 112 der Förderketten 108 angehoben. Die Förderketten 108 werden nun gegenläufig so angetrieben, daß ein Kalter 109 je Förderkette 108 die Palette 10, konkret deren Querbrett 13 untergreift und von dem Hubtisch 113 abhebt. Der Hubtisch 113 fährt nun wieder in seine untere Position und ist zur Übernahme einer nachfolgenden Palette 10 bereit.

Läuft die gesamte Palettenreparaturanlage störungsfrei, werden die Paletten 10 allerdings direkt von dem Demontageförderer 32 in die Bestückungsstation 34 übergeben. Zu diesem Zweck befindet sich auf einer Ebene unterhalb des Palettenmagazins 33 und oberhalb des Demontageförderers 32 eine Übergabestation 114. Der Hubtisch 113 übernimmt nun von dem Demontageförderer 32 die Paletten 10 und hebt sie lediglich bis in die Ebene der Übergabestation 114. In der Übergabestation 114 befindet sich ein nicht näher erkennbarer und quer zur Transportrichtung des Demontageförderers 32 beweglicher Schlitten. Der Schlitten weist zu beiden Stirnseiten der Palette in einer Horizontalebene verschiebbare Haltebalken auf, an den Kalter angebracht sind, die die Palette 10, konkret die äußeren Querbretter 13 untergreifen. Diese werden zur Übernahme der Palette 10 zusammengefahren und der Schlitten sodann in der Darstellung gemäß Fig. 1 nach unten in die Bestückungsstation 32, nämlich zum Übergabeplatz 35 verfahren. Hier wird die Palette 10 von dem Schlitten auf einen weiteren Kettenförderer abgesetzt, der die Paletten 10 durch die nachfolgenden Stationen gemäß Fig. 1 transportiert.

In analoger Weise können mit Hilfe des Hubtisches 113 auch Paletten 10 aus dem Palettenmagazin 33 entnommen und auf die Ebene der Übergabestation 114 abgesenkt werden, wo sie dann wiederum durch den oben beschriebenen Schlitten übernommen und zum Übergabeplatz 35 transportiert werden.

Eine weitere Besonderheit der vorbeschriebenen Palettenübergabe besteht darin, daß hier noch einmal erfaßt wird, welche Kufen 30 bzw. Deckbretter 14 in der Demontagestation 29 abgetrennt worden sind. Konkret ist im Bereich jeder Kufenposition ein optoelektrischer Sensor an den horizontal verschiebbaren Haltebalken des Schlittens angebracht. Dieser wirkt mit einem Spiegel im gegenüberliegenden Haltebalken des Schlittens zusammen. Wird der von dem optoelektrischen Sensor ausgesendete Lichtstrahl reflektiert, fehlt die Kufe 30 an dieser Position und ist zu ersetzen. Dieses wird durch eine entsprechende Steuerung der Kufenbestückungsstation 36 weitergemeldet. Selbstverständlich ist hier auch eine normale Lichtschranke einsetzbar.

In analoger Weise könnten auch Lichtschranken zum Erkennen fehlender Deckbretter 14 verwendet werden. Es hat sich bei der Erprobung eines Prototyps aber als zweckmäßig erwiesen, hierfür mechanische Taster einzusetzen. Diese sind im Bereich des Übergabeplatzes 35 angeordnet. Diese werden durch noch vorhandene Deckbretter 14 betätigt, sobald die Palette 10 durch den Schlitten von der Übergabestation 114 in den Bereich des Übergabeplatzes 35 verschoben worden ist. Die mechanischen Taster sind dann durch noch vorhandene Deckbretter 14 "gedrückt". Das so gewonnene Signal wird wiederum zur Steuerung der Brettbestückungsstation 37 weitergemeldet. Die Palette 10 wird nun auf den oben genannten Kettenförderer abgesenkt.

Es ist selbstverständlich, daß analoge mechanische Taster auch in der Übergabestation 114 zum Erkennen fehlender Kufen 30 anstelle der optoelektrischen Taster eingesetzt werden können.

### Bezugszeichenliste:

- 10: Europalette/Palette
- 11: Klotz
- 12: Bodenbrett
- 13: Querbrett
- 14: Deckbrett
- 15: Zuförderer
- 16: Stellplatz
- 17: Entstapler
- 18: Zwischenplatz
- 19: Begutachtungsstation
- 20: Bedienperson
- 21: Bedienpult
- 22: Palettenweiche
- 23: Palettenweiche
- 24: Linie
- 25: Linie
- 26: Linie
- 27: Palettenstapler
- 28: Übergabeplatz
- 29: Demontagestation
- 30: Kufe
- 31: Gurtförderer
- 32: Demontageförderer
- 33: Palettenmagazin
- 34: Bestückungsstation
- 35: Übergabeplatz
- 36: Kufenbestückungsstation
- 37: Brettbestückungsstation
- 38: Zentrier- und Nagelstation
- 39: Brücke
- 40: Anpreßstation
- 41: Eckensägestation
- 42: Brennstation
- 43: Kontrollstation
- 44: Palettenweiche
- 45: Abförderer
- 46: Palettenstapler
- 47: Bereitstellungsplatz
- 48: Kufenreparaturstation
- 49: Kufenreparaturplatz
- 50: Kufenmagazin
- 51: Kufenförderer
- 52: Kufenförderer
- 53: Kufenförderer
- 54: Förderkette
- 55: Umlenkrad
- 56: Elektromotor
- 57: Abwurfkanal
- 58: Abwurfeinrichtung
- 59: Leitprofil
- 60: Schenkel
- 61: Abwurfklaue
- 62: Schenkel
- 63: Gelenk
- 64: Hebel
- 65: Pneumatikzylinder
- 66: Brettmagazin
- 67: Linearführung
- 68: Halter
- 69: Pneumatikzylinder
- 70: Schenkel
- 71: Ausnehmung
- 72: Förderkette
- 73: Einführkanal
- 74: Zentrierkanal
- 75: Zentrierkanal
- 76: Zentrierkanal
- 77: Außenwand
- 78: Innenwand
- 79: Stößel
- 80: Wände
- 81: Stößel
- 82: Klemme
- 83: Führungsstange
- 84: Linearführung
- 85: Kolbenstange
- 86: Messersystem
- 87: Betätigungszylinder
- 88: Gelenk
- 89: Kolbenstange
- 90: Gelenk
- 91: Schlitten
- 92: Hydraulikzylinder
- 93: Federstößel
- 94: Oberführung
- 95: Rolle
- 96: Innenwand
- 97: Außenwand
- 98: Stößel
- 99: Backe
- 100: Klemme
- 101: U-Profil
- 102: Rolle
- 103: Befestigung
- 104: Quertraverse
- 105: Quertraverse
- 106: Gestell
- 107: Messer
- 108: Förderkette
- 109: Halter
- 110: Kettenglied
- 111: Säule
- 112: Kettenritzel
- 113: Hubtisch
- 114: Übergabestation

## Patentansprüche

1. Verfahren zum Reparieren beschädigter Paletten (10) aus Holz, insbesondere Europaletten, mit folgenden Verfahrensschritten:
a) vorbestimmte, beschädigte Bretter (13) und/oder Kufen (30) werden abgetrennt,
b) die abgetrennten Bretter (13) und/oder Kufen (30) werden aus dem Arbeitsbereich ausgeschleust,
c) die teildemontierte Palette (10) wird mit intakten Brettern (13) und/oder Hufen (30) bestückt und diese Bretter (13) und/oder Hufen (30) gleichzeitig oder in einem gesonderten Arbeitsgang ausgerichtet,
d) die zugefügten Bretter (13) und/oder Kufen (30) werden an der Palette (10) befestigt, insbesondere angenagelt.

2. Verfahren nach Anspruch 1, dadurch gekennzeichnet, daß abgetrennte, beschädigte Kufen (30) gesondert repariert und anschließend wieder zu Reparatur defekter Paletten (10) verwendet werden.

3. Verfahren nach Anspruch 1 oder 2, dadurch gekennzeichnet, daß die beschädigten Paletten (10) stapelweise zugeführt und vor der Reparatur vereinzelt werden.

4. Verfahren nach einem der Ansprüche 1 bis 3, dadurch gekennzeichnet, daß die teildemontierten Paletten (10) vor der Bestückung mit intakten Brettern (13) und/oder Kufen (30) in einem Palettenmagazin (33) zwischengespeichert werden.

5. Vorrichtung zum Reparieren beschädigter Paletten (10) aus Holz, insbesondere Europaletten, mit folgenden Stationen:
a) einer Demontagestation (29), in der vorbestimmte beschädigte Bretter (13) und/oder Kufen (30) abgetrennt werden,
b) einer Bestückungsstation (34), in der die teildemontierte Palette (10) mit intakten Brettern (13) und/oder Kufen (30) bestückt werden,
c) einer Nagelstation (38), in der die zugefügten Kufen (30) und/oder Bretter (13) an der Palette (10) befestigt, insbesondere angenagelt, werden.

6. Vorrichtung nach Anspruch 5, dadurch gekennzeichnet, daß die Bestückungsstation (34) eine Kufenbestückungsstation (36) zum Bestücken der teildemontierten Palette (10) mit intakten Kufen (30) und eine Brettbestückungsstation (37) zum Bestücken der teildemontierten Palette (10) mit intakten Brettern (13) umfaßt.

7. Vorrichtung nach Anspruch 5 oder 6, gekennzeichnet durch eine Zentrierstation (38) zum Ausrichten der ausgetauschten Bretter (13) und/oder Kufen (30) vor der Nagelung.

8. Vorrichtung nach einem der Ansprüche 5 bis 7, gekennzeichnet durch eine Kufenreparaturstation (48), in der die abgetrennten Kufen (30) reparierbar sind, wobei der Kufenreparaturstation (48) ein Kufenmagazin (50) zugeordnet ist, in dem reparierte Kufen (30)zwischengespeichert und zum Bestücken der teildemontierten Paletten (10) entnehmbar sind.

9. Vorrichtung nach Anspruch 8, dadurch gekennzeichnet, daß das Kufenmagazin (50) einen Förderer (51, 52, 53), insbesondere einen Kettenförderer, aufweist, durch den die reparierten Kufen (30) der Kufenbestückungsstation (36) zuführbar sind, wobei das Kufenmagazin (50) eine der Zahl der Kufen (30) einer Palette (10) entsprechende Zahl von Förderern (51, 52, 53), insbesondere drei Förderer (51, 52, 53), aufweist.

10. Vorrichtung nach einem der Ansprüche 5 bis 9, gekennzeichnet durch eine Begutachtungsstation (19), in der Schäden an der Palette (10) visuell oder automatisch erfaßbar sind.

11. Vorrichtung nach einem der Ansprüche 5 bis 10, dadurch gekennzeichnet, daß zwischen der Palettendemontagestation (29) und der Bestückungsstation (34) ein Palettenmagazin (33) zum Zwischenspeichern teildemontierter Paletten (10) angeordnet ist.

12. Vorrichtung nach einem der Ansprüche 5 bis 11, dadurch gekennzeichnet, daß der Nagelstation (38) eine Anpreßstation (40) nachgeschaltet ist, in der die ausgetauschten Kufen (30) und/oder Bretter (13, 14) anpreßbar sind.

13. Vorrichtung nach einem der Ansprüche 5 bis 12, gekennzeichnet durch einen Palettenstapler (46), durch den die reparierten Paletten (10) zu Palettenstapeln stapelbar sind.

14. Vorrichtung nach einem der Ansprüche 05 bis 13, dadurch gekennzeichnet, daß in der Bestückungsstation (34) und/oder einer vorgeschalteten Station (114) Sensoren, insbesondere optoelektrische oder mechanische Taster, zum Erfassen von in der Demontagestation (29) abgetrennten Deckbrettern (14) und/oder Kufen (30) angeordnet sind, durch deren Signale die Kufen- und/oder Brettbestückung steuerbar ist.
